# EUROPÄISCHE PATENTSCHRIFT

(11) **EP 3 192 167 B1**
(45) Veröffentlichungstag und Bekanntmachung des Hinweises auf die Patenterteilung: **28.09.2022**
(21) Anmeldenummer: 15754191.3
(22) Anmeldetag: 21.08.2015
(51) Int. Cl.: H02P 29/00, B60H 1/14, B60H 1/00, B60L 1/00, B60L 1/02, H02P 29/62

(54) **VERFAHREN UND KLIMATISIERUNGSEINRICHTUNG ZUM KLIMATISIEREN EINES INNENRAUMS EINES ELEKTRISCH ANGETRIEBENEN FAHRZEUGS**
METHOD AND AIR CONDITIONING UNIT FOR AIR CONDITIONING AN INTERIOR OF AN ELECTRICALLY DRIVEN VEHICLE
PROCÉDÉ ET DISPOSITION DE CLIMATISATION DE L'INTÉRIEUR D'UN VÉHICULE À ENTRAÎNEMENT ÉLECTRIQUE

(30) Priorität: 09.09.2014 DE 102014217959
(43) Veröffentlichungstag der Anmeldung: 19.07.2017
(73) Patentinhaber: Bayerische Motoren Werke Aktiengesellschaft, 80809 München (DE)
(72) Erfinder: SCHEDEL, Felix, 82131 Gauting (DE); HOFMANN, Philipp, 80993 München (DE); SATZGER, Peter, 86899 Landsberg am Lech (DE); HORN, Oliver, 81475 München (DE); MOSER, Markus, 80809 München (DE)
(86) Internationale Anmeldenummer: PCT/EP2015/069206
(87) Internationale Veröffentlichungsnummer: WO 2016/037827

(56) Entgegenhaltungen:
- WO-A1-2014/010218
- DE-A1- 19 649 710
- DE-A1-102010 062 869
- DE-A1-102012 224 071
- US-A1- 2011 095 717

## Beschreibung

Die vorliegende Erfindung betrifft ein Verfahren und Klimatisierungseinrichtung zum Klimatisieren eines Innenraums eines elektrisch angetriebenen Fahrzeuges mittels der Verlustwärme eines elektrischen Antriebs.

Kraftfahrzeuge, die über längere Fahrzeiten rein elektrisch betrieben werden, umfassen elektrische Heizvorrichtungen zur Beheizung des Innenraums, da die Verlustwärme des elektrischen Antriebsstrangs, beispielsweise des Akkumulators (Hochspannungsbatterie), der elektrischen Maschine, der Leistungselektronik, des Gleichstrom/Gleichstrom-Wandlers und dergleichen, nicht in allen Fahrzuständen ausreicht, um den Innenraum des Kraftfahrzeuges zu beheizen. Eine derartige zusätzliche elektrische Heizvorrichtung benötigt zusätzlichen Bauraum, erhöht die Kosten des Kraftfahrzeuges und erhöht das Gewicht des Kraftfahrzeuges.

Aus der DE 10 2012 019 005 A1 ist bekannt, die Verlustwärme der elektrischen Maschine und deren elektrischer Ansteuerung zum Beheizen des Innenraums eines Kraftfahrzeuges zu verwenden.

Die EP 1 313 628 B1 offenbart das Betreiben einer elektrischen Maschine eines Kraftfahrzeuges außerhalb des optimalen Betriebspunktes zum Erhöhen der Abwärme zum Temperieren des Innenraums.

Die DE 10 2009 043 316 A1 offenbart die Verwendung einer Wärmepumpenanordnung zum Temperieren des Innenraums eines Kraftfahrzeuges.

Die im Stand der Technik vorgeschlagenen Maßnahmen zum Temperieren des Innenraums einen Kraftfahrzeuges mit einem elektrischen Antrieb sind hinsichtlich des Gesamtwirkungsgrades nicht optimal.

Die Erfindung stellt sich zur Aufgabe, ein verbessertes Verfahren und eine verbesserte Klimatisierungseinrichtung zum Temperieren eines Innenraums eines Fahrzeuges zu schaffen.

Die Aufgabe der Erfindung wird durch ein Verfahren nach Anspruch 1 und eine Klimatisierungseinrichtung nach Anspruch 8 gelöst.

Das erfindungsgemäße Verfahren zum Temperieren eines Innenraums eines Kraftfahrzeuges mit einem elektrischen Antrieb temperiert den Innenraum mittels einer Wärmepumpenanordnung mit einem Heiztemperaturbereich und einem Niedertemperaturbereich, wobei der Heiztemperaturbereich zumindest einen thermisch mit dem Innenraum gekoppelten Innenraum-Wärmetauscher umfasst und zur Beheizung des mindestens einen Innenraums bei jedem Betriebszustand des Elektrofahrzeuges ausreichend ist.

Die US 2011/0095717 A1 offenbart das Erwärmen von Öl eines elektrisch angetriebenen Kraftfahrzeuges durch Beschalten der Antriebsmaschine derart, dass der Motor so mit Strom beaufschlagt wird, dass kein Drehmoment abgegeben wird.

Die DE 10 2010 062 869 A1 betrifft eine Klimaanlagenvorrichtung für ein Elektrofahrzeug mit einer Mehrzahl Pumpen, einem Verdichter und einem Verdampfer.

Die DE 196 49 710 A1 offenbart eine Fahrgastraumbeheizung bei einem Elektrofahrzeug mit einem von einer Antriebsbatterie gespeisten und von einer Antriebssteuereinheit geregelten elektrischen Antriebsmotor mit einem Wärmeträgerkreislauf, durch den Abwärme von mindestens einer Antriebskomponente aufnehmbar und an den Fahrgastraum abgebbar ist. Es wird vorgeschlagen, dass die Antriebssteuereinheit in Abhängigkeit benötigter Heizleistung in eine Betriebsweise versetzbar ist, bei der die von mindestens einer der Antriebskomponenten an den Wärmeträgerkreislauf als Abwärme abgegebene Verlustleistung erhöht ist.

Die Erfindung stellt sich zur Aufgabe, ein verbessertes Verfahren und eine verbesserte Klimatisierungseinrichtung zum Temperieren eines Innenraums eines Fahrzeuges zu schaffen.

Die Aufgabe der Erfindung wird durch ein Verfahren nach Anspruch 1 und eine Klimatisierungseinrichtung nach Anspruch 6 gelöst.

Das erfindungsgemäße Verfahren zum Temperieren eines Innenraums eines Kraftfahrzeuges mit einem elektrischen Antrieb temperiert den Innenraum mittels einer Wärmepumpenanordnung mit einem Heiztemperaturbereich und einem Niedertemperaturbereich, wobei der Heiztemperaturbereich zumindest einen thermisch mit dem Innenraum gekoppelten Innenraum-Wärmetauscher umfasst und der Niedertemperatur einen Außenwärmetauscher und/oder zumindest einen an einer Komponente des elektrischen Antriebs angeordneten Wärmetauscher umfasst. Falls das Verfahren ermittelt, dass der Innenraum des Kraftfahrzeuges temperiert werden soll, wird Heizenergie des Heiztemperaturbereiches der Wärmepumpenanordnung an den Innenraum des Fahrzeuges abgegeben. Der Betriebspunkt des elektrischen Antriebs wird derart variiert, das die Erzeugung von Verlustwärme in zumindest einer elektrischen Komponente des elektrischen Antriebs gesteuert wird, wodurch die Temperatur des Niedertemperaturbereichs im stationären oder quasistationären Betrieb auf ein derartiges Niveau gesteuert wird, das sicherstellt, dass die Wärmepumpenanordnung die Heizenergie bereitstellen kann. Die benötigte Heizenergie legt fest, welches Temperaturniveau im Niedertemperaturbereich der Wärmepumpenanordnung herrschen soll. Das benötigte Energieniveau im Niedertemperaturbereich der Wärmepumpenanordnung legt den Betriebspunkt des elektrischen Antriebs fest. Mit anderen Worten, wird wenig Heizenergie benötigt und/oder weist der Niedertemperaturbereich eine hohe Temperatur auf, wird der elektrische Antrieb mit einem Betriebspunkt betrieben, der dem optimalen Betriebspunkt entspricht oder sich in dessen Nähe befindet. Weist der Niedertemperaturbereich eine zu niedrige Temperatur auf, um mittels der Wärmepumpenanordnung die Heizenergie zu erzeugen, wird der elektrische Antrieb bei einem Betriebspunkt betrieben, der weiter vom optimalen Betriebspunkt entfernt ist.

Im Kontext dieser Erfindung bedeutet optimaler Betriebspunkt ein Betriebspunkt, bei dem möglichst niedrige thermische Verluste im elektrischen Antrieb und dessen Komponenten entstehen. Die Steuerung eines elektrischen Antriebes und die Auswahl eines geeigneten Betriebspunktes ist dem Fachmann bekannt, ebenso wie die Funktionsweise einer Wärmepumpe sowie das Auslegen von Steuerungen und Regelkreisen. Somit wird deren Beschreibung im Sinne der Prägnanz weggelassen.

Das erfindungsgemäße Verfahren zum Temperieren des Innenraums des Kraftfahrzeuges mit dem elektrischen Antrieb kann das Zuführen von Wärme des Heiztemperaturbereiches der Wärmepumpe an den Innenraum des Fahrzeuges umfassen, falls ermittelt wird, dass der Innenraum des Kraftfahrzeuges temperiert werden soll. Falls Komponenten des elektrischen Antriebs einen Betrag an Verlustwärme erzeugen, der ausreicht, um den Innenraum des Kraftfahrzeuges zu temperieren, wenn zumindest eine Komponente des elektrischen Antriebs thermisch mit einem Niedertemperaturbereich der Wärmepumpe gekoppelt ist, wird die Verlustwärme zumindest einer Komponente des elektrischen Antriebs mittels des Niedertemperaturbereiches der Wärmepumpe abgeführt, wobei sich die Temperatur des Niedertemperaturbereiches im stationären oder quasistationären Betrieb im Bereich der Umgebungstemperatur des Kraftfahrzeuges befindet. Dadurch werden die Verluste reduziert, die entstehen, wenn die thermische Energie, die aus der Verlustwärme erhalten wird, an die Umgebung des Kraftfahrzeuges abgegeben wird. Falls die Komponenten des elektrischen Antriebs einen Betrag an Verlustwärme erzeugen, der nicht ausreicht, um den Innenraum des Kraftfahrzeuges zu temperieren, wenn zumindest eine Komponente des elektrischen Antriebs thermisch mit dem Niedertemperaturbereich der Wärmepumpe gekoppelt ist, und falls die Außentemperatur so hoch und/oder die Luftfeuchtigkeit so niedrig ist, dass keine Gefahr besteht, dass eine funktionsbeeinträchtigende Vereisung im Bereich des Niedertemperaturbereiches auftritt, wird die Verlustwärme zumindest einer Komponente des elektrischen Antriebs mittels des Niedertemperaturbereiches abgeführt, wobei sich die Temperatur des Niedertemperaturbereiches im stationären oder quasistationären Betrieb unter der Umgebungstemperatur des Fahrzeuges befindet. Dadurch kann auch Wärme aus der Umgebung genutzt werden, um den Innenraum des Kraftfahrzeuges zu temperieren. Je niedriger die Temperatur des Niedertemperaturbereiches ist, desto mehr Wärme kann der Umgebung entzogen werden. Die Temperatur des Niedertemperaturbereiches kann nicht beliebig niedrig ausgewählt werden, da ansonsten die Gefahr einer funktionsbeeinträchtigenden Vereisung im Bereich des Niedertemperaturbereiches besteht. Der Umgebung kann Wärme mittels eines Niedertemperaturwärmetauschers bzw. Außenwärmetauscher entzogen werden, der sich im Niedertemperaturbereich der Wärmepumpenanordnung befindet.

Falls die Komponenten des elektrischen Antriebs einen Betrag an Verlustwärme erzeugen, der nicht ausreicht, um den Innenraum des Kraftfahrzeuges zu temperieren, wenn zumindest eine Komponente thermisch mit einem Niedertemperaturbereich einer Wärmepumpe gekoppelt ist, und falls die Außentemperatur so niedrig und/oder die Luftfeuchtigkeit so hoch ist, dass Gefahr besteht, dass eine Vereisung im Bereich des Niedertemperaturbereiches auftritt, wird der elektrische Antrieb außerhalb des optimalen Betriebspunktes derart angesteuert, dass die Erzeugung von Verlustwärme in einer ersten elektrischen Komponente des elektrischen Antriebs zunimmt, und die von der ersten elektrischen Komponente erzeugte Verlustwärme wird mittels des Niedertemperaturbereiches der Wärmepumpenanordnung abgeführt. Dadurch kann die Temperatur des Niedertemperaturbereichs soweit angehoben werden, dass keine oder wenig Wärme am Außenwärmetauscher aufgenommen wird. Dadurch kann sichergestellt werden, dass keine Vereisung im Bereich des Niedertemperaturbereiches bzw. Außenwärmetauschers auftritt bzw. die Vereisung nicht funktionseinschränkend ist.

Das Verfahren ist so ausgebildet, dass das Fluid des Niedertemperaturbereiches den Niedertemperaturwärmetauscher bzw. Außenwärmetauscher, der Wärme mit der Außenluft austauscht, lediglich dann durchströmt, wenn der Umgebung des Kraftfahrzeuges Wärme entzogen werden soll. Dies ist der Fall, wenn die Temperatur des Fluids im Niedertemperaturbereich niedriger als die Umgebungstemperatur ist. Wenn das Fluid des Niedertemperaturbereiches den Niedertemperaturwärmetauscher nicht durchströmt, wird eine Vereisung vermieden oder es wird vermieden, dass an die Umgebung Wärme abgegeben wird.

Der elektrische Antrieb weist einen Akkumulator, eine elektrische Maschine, die vom Akkumulator mit Strom versorgt wird und die das Kraftfahrzeug antreibt, und eine Antriebssteuerungseinrichtung auf, die die Versorgung der elektrischen Maschine mit Strom aus dem Akkumulator steuert und/oder die das Laden des Akkumulators mit von der elektrischen Maschine erzeugten Strom steuert. Die Antriebssteuerungseinrichtung kann einen Gleichstrom/Gleichstrom-Wandler mit einer Mehrzahl von Leistungstransistoren, einen Zwischenkreiskondensator, Stecker, Leitungen, eine Halbleiter-Ansteuerung, Kondensatoren, Dioden und weitere passive Bauteile umfassen.

Die Wärmepumpenanordnung kann derart angesteuert werden, dass sich die Temperatur des Kühlmediums der zumindest einen elektrischen Komponente im Bereich von +/- 10 K, vorzugsweise im Bereich von +/- 5 K, um die Umgebungstemperatur des Kraftfahrzeuges befindet.

Das erfindungsgemäße Verfahren hat den Vorteil, dass die Wärmepumpenanordnung zusätzlich zur zumindest einer elektrischen Komponente der Umgebung Wärme entziehen kann, da sich die Temperatur der ersten elektrischen Komponente im Bereich der Temperatur der Umgebung befindet. Die zumindest eine elektrische Komponente und die Umgebung sind mit dem Niedertemperaturbereich der Wärmepumpenanordnung thermisch gekoppelt. Bei einer niedrigen Außentemperatur unter oder in der Nähe des Gefrierpunktes kann die Temperatur der zumindest einen elektrischen Komponente über oder knapp unter der Temperatur der Umgebung des Kraftfahrzeuges gehalten werden und so eine Vereisung des Außenwärmetauschers vermieden bzw. reduziert werden.

Der Niedertemperaturbereich kann ein Verdampfen des Fluids bzw. Kühlmittels aufweisen. Der ersten elektrischen Komponente und/oder der Umgebung werden Wärme mittels des verdampfenden Kühlmittels oder eines Wasser/Glykol-Kreislaufes entzogen. Alternativ kann die Wärmepumpenanordnung die erzeugte Wärme mittels eines Innenraum-Wärmetauschers direkt an die Luft abgeben, die in den Innenraum des Fahrzeuges geleitet wird. Die Wärmepumpenanordnung kann die erzeugte Wärme mittels eines Wärmetauschers, der mit dem Heiztemperaturbereich thermisch gekoppelt ist, an eine Heizflüssigkeit abgegeben werden, die an zumindest einen weiteren Wärmetauscher geleitet wird, der Luft erwärmt, die in den Innenraum des Fahrzeuges geleitet wird. Diese Anordnung betrifft eine Flüssigkeits-Flüssigkeits-Wärmepumpenanordnung, wobei der Heiztemperaturbereich ein flüssiges Medium verwendet, beispielsweise eine Mischung aus Glykol und Wasser.

Im stationären oder quasistationären Betrieb kann sich die Temperatur der ersten elektrischen Komponente ohne eine Änderung eines Parameters, der den elektrischen Antrieb betrifft, lediglich um einen Betrag ändern, der niedriger als ein vorbestimmter Schwellenwert ist. Der Ausdruck stationärer oder quasistationärer Betrieb entspricht dem thermisch eingeschwungenen Zustand. Falls kein Parameter, beispielsweise Last, Geschwindigkeit des Fahrzeuges, Neigung der Fahrbahn, ein Steuerungsparameter der elektrischen Maschine, die Vertrimmung etc., geändert wird, bleibt die Temperatur der ersten elektrischen Komponente im Wesentlichen konstant und ändert sich lediglich um den Schwellenwert. Der Schwellenwert kann bis zu +/- 5 K, vorzugsweise bis zu +/- 10K betragen. Der Ausdruck stationärer oder quasistationärer Betrieb umfasst nicht die Änderung der Temperatur der ersten elektrischen Komponente beim Ändern eines Parameters.

Das Verfahren kann ferner den Schritt des Überwachens der Temperatur des Kühlmechanismus der Antriebssteuerungseinrichtung und des Ansteuerns des elektrischen Antriebs derart, dass die Schwankung der Temperatur der Bauteile der Antriebssteuerungseinrichtung niedriger als ein vorbestimmter Schwellenwert ist, umfassen. Dadurch kann sichergestellt werden, dass Temperaturschwankungen der Bauteile der Antriebssteuerungseinrichtung vermieden werden, wodurch die Lebensdauer der Bauteile der Antriebssteuerungseinrichtung und der Antriebssteuerungseinrichtung insgesamt verlängert werden kann.

Das Verfahren kann ferner den Schritt des Lieferns von Strom durch die Antriebssteuerungseinrichtung derart aufweisen, dass sich das Verhältnis aus dem feldbildenden Strom id und dem drehmomentbildenden Strom iq außerhalb des für den jeweiligen Betriebspunkt optimalen Verhältnisses des feldbildenden Stroms id und des drehmomentbildenden Stroms iq befindet. Insbesondere das Erhöhen des feldbildenden Stroms id führt zu mehr Verlustleistung in den elektrischen Komponenten der Antriebssteuerungseinrichtung. Durch Einprägen von Strom, der nicht das optimale Verhältnis aus dem feldbildenden Strom id und dem drehmomentbildenden Strom iq aufweist, werden sowohl die Temperatur in der elektrischen Maschine als auch die Temperatur der Bauteile der Antriebssteuerungseinrichtung erhöht.

Das Verfahren kann ferner die Schritte des Betätigens einer Bremse des Kraftfahrzeuges und das Ansteuern des elektrischen Antriebes so, dass er das Kraftfahrzeug bewegen soll, aufweisen. Die Feststellbremse stützt das durch die elektrische Maschine erzeugte Drehmoment ab. Dieser Aspekt der Erfindung eignet sich für eine Vorkonditionierung des Innenraums oder zum Heizen des Innenraums bei einem verkehrsbedingten Halten des Kraftfahrzeuges, beispielsweise an einer Ampel.

Das Verfahren kann ferner den Schritt des Ansteuerns der Antriebssteuerungseinrichtung derart aufweisen, dass lediglich ein feldbildender Strom id der elektrischen Maschine zugeführt wird. Der feldbildende Strom id trägt nicht zur Drehmomentabgabe der elektrischen Maschine bei. Es treten geringe Geräusche auf, da keine Drehung stattfindet. Durch die Belastung im Stillstand mit Gleichstrom sinkt die Dauerbelastbarkeit der elektrischen Maschine und der Antriebssteuerungseinrichtung. Wegen einer eventuellen ungleichmäßigen Erwärmung erfassen Temperatursensoren der Wicklung nicht besonders heiße Punkte (Hot-Spot). Dieser Schritt ist zum Vorkonditionieren des Innenraums beim Stillstand des Kraftfahrzeuges oder beim verkehrsbedingten Halten des Kraftfahrzeuges möglich.

Das Verfahren kann den Schritt des Ansteuerns des elektrischen Antriebes auf solche Weise aufweisen, dass die Antriebssteuerungseinrichtung die elektrische Maschine derart ansteuert, dass in der elektrischen Maschine ein Drehfeld erzeugt wird, ohne dass sich die Achse der elektrischen Maschine dreht. Die Frequenz des Drehfeldes kann so hoch sein, dass sie keine Drehung der Achse der elektrischen Maschine bewirken kann, da ein zu niedriges Drehmoment erzeugt wird. Dieser Schritt eignet sich zur Vorkonditionierung des Innenraums des Kraftfahrzeuges und bei einem verkehrsbedingten Halten des Kraftfahrzeuges.

Gemäß einem anderen Aspekt der Erfindung kann der elektrische Antrieb, falls sich die elektrische Maschine und/oder das Kraftfahrzeug im Stillstand befindet, so angesteuert werden, dass die Antriebssteuerungseinrichtung die elektrische Maschine derart ansteuert, dass die elektrische Maschine ein erstes Drehmoment in eine erste Richtung erzeugt und anschließend ein zweites Drehmoment in eine zweite Richtung erzeugt, die der ersten Richtung entgegengesetzt ist. Das Kraftfahrzeug wird durch das erste Drehmoment und das zweite Drehmoment nicht von dem Ort, an dem es sich befindet, wegbewegt. Damit keine Drehbewegung des Antriebsrades des Kraftfahrzeuges auftritt, muss die Regelung schnell die Momentenrichtung umkehren. Dieser Aspekt des Verfahrens kann zur Vorkonditionierung des Innenraums beim Parken des Kraftfahrzeuges oder beim verkehrsbedingten Halten angewendet werden. Ferner kann diese Betriebsart bei einer elektrischen Initialfahrt, d.h. nach einem längeren Abstellen des Fahrzeuges verwendet werden.

Die Erfindung umfasst unter einem weiteren Aspekt das Ansteuern des elektrischen Antriebs, falls sich das Fahrzeug bewegt, derart, dass die Antriebssteuerungseinrichtung die elektrische Maschine derart ansteuert, dass die elektrische Maschine ein erstes Überlagerungsdrehmoment in die erste Richtung erzeugt und anschließend ein zweites Überlagerungsdrehmoment in die zweite Richtung erzeugt, die der ersten Richtung entgegengesetzt ist. Das erste Überlagerungsdrehmoment und das zweite Überlagerungsdrehmoment sind einer Drehbewegung der elektrischen Maschine überlagert. Das Kraftfahrzeug wird durch das erste Überlagerungsdrehmoment und das zweite Überlagerungsdrehmoment nicht beschleunigt und nicht verzögert. Unter einem weiteren Aspekt der Erfindung kann, falls sich ein Getriebe des Kraftfahrzeuges im Leerlauf befindet, so dass kein Drehmoment von der elektrischen Maschine an ein Antriebsrad übertragen wird, der elektrische Antrieb so angesteuert werden, dass die Antriebssteuerungseinrichtung die elektrische Maschine derart ansteuert, dass die elektrische Maschine ein Drehmoment erzeugt. Dieser Aspekt der Erfindung ist zum Vorkonditionieren des Innenraums sowie zum Heizen aufgrund eines verkehrsbedingten Anhaltens anwendbar.

Gemäß einem weiteren Aspekt der Erfindung kann, falls die elektrische Maschine ein Drehmoment zum Antreiben des Fahrzeuges erzeugt, der elektrische Antrieb so angesteuert werden, dass die Antriebssteuerungseinrichtung der elektrischen Maschine einen höheren feldbildenden Strom id zuführt, als für den jeweiligen Betriebspunkt, in dem sich die elektrische Maschine befindet, erforderlich ist. Gerade beim Anfahren kann kurze Zeit mit der maximal möglichen Verlustheizung geheizt werden. Der zusätzliche feldbildende Strom id wird der regulären Regelung überlagert.

Gemäß einem weiteren Aspekt der Erfindung kann, falls die elektrische Maschine Strom erzeugt, der elektrische Antrieb so angesteuert werden, dass ein höherer feldbildender Strom id von der elektrischen Maschine zur Antriebssteuerungseinrichtung fließt.

Die Erfindung betrifft auch eine Klimatisierungseinrichtung gemäß Anspruch 6 für ein Kraftfahrzeug mit einem elektrischen Antrieb, der einen Akkumulator, eine Leistungseinrichtung und eine elektrische Maschine umfasst, die von dem Akkumulator mit Strom versorgt wird und die das Fahrzeug antreibt. Die Klimatisierungseinrichtung umfasst ferner eine Wärmepumpenanordnung mit einem Niedertemperaturbereich, der mit mindestens einer Komponente des elektrischen Antriebs und mit der Umgebung des Kraftfahrzeuges mittels eines Außenwärmetauschers thermisch gekoppelt ist und einem Heiztemperaturbereich, der mit dem Innenraum des Kraftfahrzeuges mittels eines Innenraum-Wärmetauschers thermisch gekoppelt ist. Die Klimatisierungseinrichtung ist dazu ausgebildet, falls ermittelt wird, dass der Innenraum des Kraftfahrzeuges temperiert werden soll, Heizenergie des Temperaturbereiches der Wärmepumpenanordnung dem Innenraum des Fahrzeuges zuzuführen und den Betriebspunkt des elektrischen Antriebs derart zu wählen, dass die Erzeugung von Verlustwärme in zumindest einer elektrischen Komponente des elektrischen Antriebs gesteuert wird, wodurch die Temperatur des Niedertemperaturbereichs im stationären oder quasistationären Betrieb auf ein derartiges Niveau gesteuert wird, das sicherstellt, dass die Wärmepumpenanordnung die Heizenergie bereitstellen kann.

Die Vorrichtung ist weiter so ausgebildet, wie zuvor hinsichtlich des Verfahrens beschrieben wurde. Hinsichtlich der Vorteile der Klimatisierungsvorrichtung wird auf das Verfahren verwiesen.

Die Klimatisierungseinrichtung ist dazu ausgebildet, falls die Komponenten des elektrischen Antriebs einen Betrag an Verlustwärme erzeugen, der ausreicht, um den Innenraum des Kraftfahrzeuges zu temperieren, die Verlustwärme zumindest einer Komponente des elektrischen Antriebs mittels des Niedertemperaturbereiches der Wärmepumpenanordnung abzuführen, wobei sich die Temperatur des Niedertemperaturbereiches im stationären oder quasistationären Betrieb im Bereich der Umgebungstemperatur des Kraftfahrzeuges befindet. Falls die Komponenten des elektrischen Antriebs einen Betrag an Verlustwärme erzeugen, der nicht ausreicht, um den Innenraum des Kraftfahrzeuges zu temperieren, und falls die Außentemperatur so hoch und/oder die Luftfeuchtigkeit so niedrig ist, dass keine Gefahr besteht, dass eine Vereisung im Bereich des Niedertemperaturbereichs auftritt, wird die Verlustwärme zumindest einer Komponente des elektrischen Antriebs mittels des Niedertemperaturbereiches der Wärmepumpenanordnung abgeführt, wobei sich die Temperatur des Niedertemperaturbereiches im stationären oder quasistationären Betrieb unter der Umgebungstemperatur des Kraftfahrzeuges befindet.

Falls die Komponenten des elektrischen Antriebs einen Betrag an Verlustwärme erzeugen, der nicht ausreicht, um den Innenraum des Kraftfahrzeuges zu temperieren, und falls die Außentemperatur so niedrig und/oder die Luftfeuchtigkeit so hoch ist, dass Gefahr besteht, dass eine Vereisung im Bereich des Niedertemperaturbereiches auftritt, wird der elektrische Antrieb von der Klimatisierungseinrichtung so angesteuert, dass die Erzeugung von Verlustwärme in einer ersten elektrischen Komponente des elektrischen Antriebs zunimmt. Die von der ersten elektrischen Komponente erzeugte Verlustwärme wird mittels des Niedertemperaturbereiches der Wärmepumpenanordnung abgeführt und anschließend dem Innenraum zugeführt. Zusätzlich befindet sich im Niedertemperaturbereich der Wärmepumpenanordnung ein Niedertemperaturwärmetauscher, der als Wärmetauscher ausgebildet ist und das Fluid mit der Umgebung thermisch koppelt. Es ist aber auch möglich, dass keine Ventile vorgesehen sind und die Wärmetauscher in Serie geschaltet sind. Die Klimatisierungseinrichtung kann so weitergebildet sein, wie zuvor hinsichtlich des Verfahrens beschrieben wurde.

Die Erfindung wird nun unter Bezugnahme auf die beigefügte Figur erläutert, die eine exemplarische und nicht beschränkende Ausführungsform der Erfindung zeigt, wobei
Figur 1 einen Prinzipschaltplan eines Temperierungssystems zum Temperieren eines Innenraums eines Fahrzeuges mit einer Wärmepumpenanordnung zeigt, und
Figur 2 einen Prinzipschaltplan eines exemplarischen elektrischen Antriebs zeigt.
Die vorliegende Erfindung kann bei Fahrzeugen angewendet werden, die lediglich einen elektrischen Antrieb oder einen so genannten Hybrid-Antrieb mit einem Verbrennungsmotor und einer elektrischen Maschine zum Antreiben des Kraftfahrzeuges aufweisen.

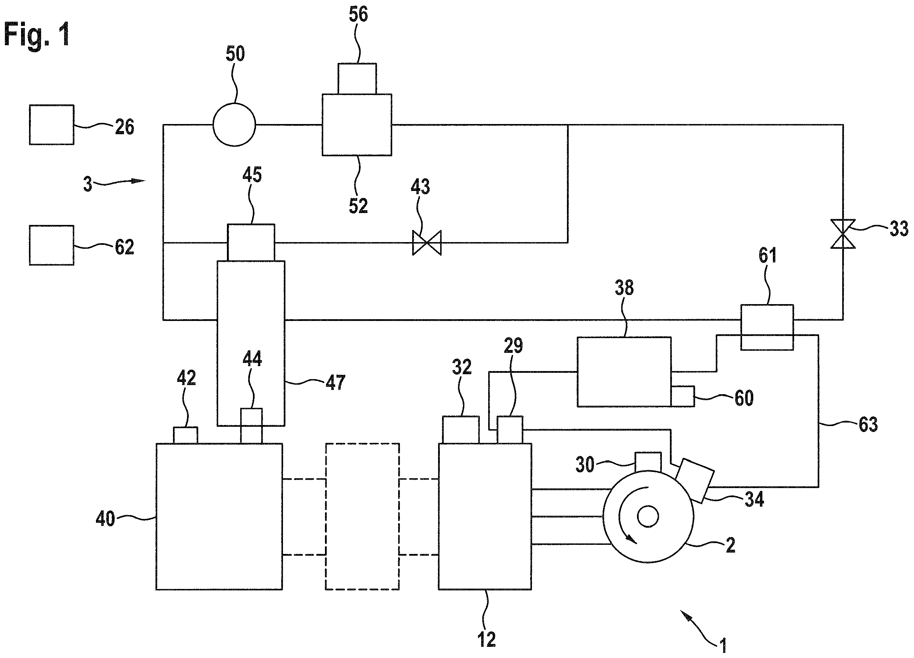

Es wird auf Figur 1 Bezug genommen, die einen Prinzipschaltplan eines Temperierungssytems zum Temperieren des Innenraums des Fahrzeuges zeigt. Eine elektrische Maschine 2 ist an eine Leistungseinrichtung 12 angeschlossen. Die Leistungseinrichtung 12 ist über optionale zusätzliche Komponenten (nicht gezeigt) an einen Akkumulator 40 angeschlossen. Im Betrieb können sich der Akkumulator 40, die Leistungseinrichtung 12 und die elektrische Maschine 2 erwärmen. Die Temperatur und/oder Leistung des Akkumulators 40 wird durch mindestens einen Sensor 42, die Temperatur und/oder Leistung der Leistungseinrichtung 12 wird durch mindestens einen Sensor 32 und die Temperatur und/oder Leistung der elektrischen Maschine 2 wird durch mindestens einen Sensor 30 ermittelt. Die ermittelten Temperaturen können an eine Klimatisierungssteuerungseinrichtung 26 gesendet werden, um Eingangsdaten für die Regelung der Temperatur des Innenraums und der Regelung der Temperatur der Komponenten des elektrischen Antriebs zu liefern.

Die Kühlung der Leistungseinrichtung 12 erfolgt mittels eines ersten Wärmetauschers 29, der von einem ersten Kühlfluid eines ersten Kühlkreislaufs 63 durchströmt wird und der Leistungseinrichtung 12 Wärme entzieht. Die Kühlung der elektrischen Maschine 2 wird mittels eines zweiten Wärmetauschers 34 durchgeführt, der von dem ersten Kühlfluid eines ersten Kühlkreislaufs 63 durchströmt wird und die von der elektrischen Maschine 2 erzeugte Verlustwärme abführt. Der Akkumulator 40 wird durch einen dritten Wärmetauscher 44 gekühlt, der von einem zweiten Kühlfluid durchströmt wird und die vom Akkumulator erzeugte Verlustwärme 40 mittels des zweiten Kühlkreislaufs 47 abführt bzw. diesen bei niedrigen Außentemperaturen temperiert. Ein vierter Wärmetauscher 58, der als Niedertemperaturwärmetauscher bzw. Außenwärmetauscher ausgebildet ist und im ersten Kühlkreislauf 63 angeordnet ist, entzieht der Umgebung Wärme oder gibt sie dorthin ab. Die Wärmetauscher 29, 34 und 58 befinden sich in einem Niedertemperaturbereich eines Kreislaufes einer Wärmepumpenanordnung.

Der erste Kühlkreislauf 63 ist mit einem ersten Verdampfer 61 gekoppelt. Der zweite Kühlkreislauf 47 ist mit einem zweiten Verdampfer 45 thermisch gekoppelt. Alternativ kann der Akkumulator 40 auch direkt durch einen Verdampfer des Wärmepumpenkreislaufs 3 ohne zwischengeschalteten Fluidkreislauf gekühlt werden.

Der Wärmepumpenkreislauf 3 umfasst einen Verdichter 50, der das von den Verdampfern 45, 61 ankommende Fluid verdichtet, wodurch dessen Temperatur erhöht wird. Das Fluid kann sich nach dem Durchströmen der Verdampfer 45, 61 40 überwiegend in einem gasförmigen Zustand befinden. Nach dem Verdichten mittels des Verdichters 50 kann sich das Fluid immer noch in einem gasförmigen Zustand befinden.

Nach dem Verdichten strömt das Kühlfluid zu einem Innenwärmetauscher 52. In dem Innenwärmetauscher 52 kühlt das verdichtete Kühlfluid ab und gibt seine Wärme an Luft in einer Leitung 56 ab, die die Luft dem Innenraum eines Fahrzeuges zum Temperieren des Innenraums zuführt. Der Innenwärmetauscher 52 arbeitet als Kondensator oder Gaskühler. Der Innenwärmetauscher 52 kann alternativ auch die Wärme an einen weiteren Fluidkreislauf abgeben, der dann über einen weiteren Wärmetauscher die Luft für den Innenraum aufwärmet (in dieser Ausführungsform nicht gezeigt).

Das abgekühlte Kühlfluid strömt in flüssiger Form zu den Entspannungsventilen 33 und 43. Im diesen Expansionsventilen wird der Druck des Kühlfluid reduziert und der Kühlmittelstrom bedarfsgerecht auf die Verdampfer 45 und 61 aufgeteilt. Das Kühlfluid strömt zu dann den Verdampfern 45, 61 in denen das flüssige Kühlfluid verdampft.

Ein erstes Expansionsventil 33 steuert die dem ersten Verdampfer 61 zugeführte Menge an Kühlmittel und somit die Temperatur des ersten Kühlkreislaufes 63 und die Temperaturen der darin enthaltenen Komponenten. Ein zweites Ventil 43 steuert die dem zweiten Verdampfer 45 zugeführte Menge an Kühlmittel und damit die Temperatur des zweiten Kühlkreises 47. Dadurch kann der Akkumulator 40 temperiert werden. Es ist auch möglich, dem Akkumulator bei niedrigen Außentemperaturen zu temperieren (in dieser Ausführungsform nicht gezeigt).

Des Weiteren können sich im Wärmepumpenkreislauf 3 noch weitere Verdampfer befinden, die beispielsweise die Zuluft für den Innenraum kühlen (in dieser Ausführungsform nicht gezeigt).

Im Übrigen ist die Arbeitsweise einer Wärmepumpenanordnung dem Fachmann bekannt und muss hierin nicht detaillierter beschrieben werden.

Die Klimatisierungssteuerungseinrichtung 26 steuert die Arbeitsweise des ersten Expansionsventil 33, des Verdichters 50 und des elektrischen Antriebes 1, um den Innenraum des Fahrzeuges zu temperieren. Insbesondere steuert die Klimatisierungssteuerungseinrichtung 26 die Arbeitsweise der Komponenten des Kraftfahrzeuges in Abhängigkeit von den Umgebungsbedingungen und in Abhängigkeit vom Wärmebedarf des Innenraumes des Kraftfahrzeuges. Falls die Klimatisierungssteuerungseinrichtung 26 ermittelt, dass der Innenraum des Kraftfahrzeuges temperiert werden soll, also Wärme zugeführt werden soll, wird Wärme mittels des Innenwärmetauschers 52 und der Leitung 56 dem Innenraum zugeführt. Anschließend prüft die Klimatisierungssteuerungseinrichtung 26 mittels der Sensoren 30, 32, 60, welcher Betrag an Wärme dem elektrischen Antrieb 1 bzw. dessen Komponenten 2, 12 und/oder dem Außenwärmetauscher 58 entzogen werden kann. Falls der elektrischen Maschine 2 und/oder der Leistungseinrichtung 12 ein Betrag an Verlustwärme entzogen werden kann, der ausreicht, um den Innenraum des Kraftfahrzeuges zu temperieren, steuert die Klimatisierungssteuerungseinrichtung 26 die Wärmepumpenanordnung und das erste Expansionsventil 33 derart an, dass der jeweiligen Komponente des elektrischen Antriebs 1 Wärme entzogen wird, um sie mittels der Wärmepumpenanordnung dem Innenraum als Heizenergie zuzuführen. Dabei befindet sich die Temperatur des Niedertemperaturbereiches, d.h. die Temperatur des ersten Wärmetauschers 29 der Leistungseinrichtung 12, die Temperatur des zweiten Wärmetauschers 34 der elektrischen Maschine 2, und/oder die Temperatur des vierten Wärmetauschers 48 im Bereich der Außentemperatur, was einen Temperaturbereich von etwa +/- 10 K, vorzugsweise von etwa +/- 5 K umfasst. Dieser Betriebsfall tritt ein, wenn von der elektrischen Maschine 2 eine vergleichsweise hohe Leistung abgerufen wird.

Falls die Klimatisierungssteuerungseinrichtung 26 mittels des an der elektrischen Maschine 2 angeordneten Sensors 30, mittels des an der Leistungseinrichtung 12 angeordneten Sensors 32, mittels des am vierten Wärmetauscher 58 angeordneten Sensors 60 und/oder des Außentemperatursensors 62 ermittelt, dass die Verlustwärme der Komponenten des elektrischen Antriebs 1, beispielsweise der elektrischen Maschine 2, der Leistungseinrichtung 12 und dergleichen, nicht ausreicht, um den Innenraum mittels des Verdichters 50 mit Wärme zu versorgen, steuert die Klimatisierungssteuerungseinrichtung 26 den Verdichter 50 und das erste Expansionsventil 33 derart an, dass die Temperatur im Niedertemperaturbereich, d.h. im Bereich der Wärmetauscher 29, 34, 58 unterhalb der Temperatur der Umgebung liegt. Diese Arbeitsweise wird dann bevorzugt, wenn keine Gefahr besteht, dass eine Vereisung an den Wärmetauschern 29, 34, 58 oder anderen Komponenten des Kraftfahrzeuges auftritt. Ferner kann diese Betriebsart auftreten, wenn eine vergleichsweise niedrige Leistung vom elektrischen Antrieb 1, 2, 12 abgerufen wird. Somit wird Wärme aus der Umgebung aufgenommen. Es versteht sich, dass beim Berücksichtigen der Gefahr eines Vereisens eines der Komponenten die Außentemperatur, die Luftfeuchtigkeit, ein Schneefall, ein Schneematsch, eine Tröpfchenbildung oder dergleichen berücksichtigt werden muss. Im Sinne dieser Erfindung wird eine geringfügige Vereisung, die die Funktionsfähigkeit des Kraftfahrzeuges nicht beeinträchtigt, toleriert.

Falls die Klimatisierungssteuerungseinrichtung 26 ermittelt, dass der Innenraum mittels des Innenraumwärmetauschers 52 temperiert werden muss, und mittels des Außentemperatursensors 62 ermittelt, dass Gefahr besteht, dass insbesondere der vierte Wärmetauscher 58 verreisen könnte, weist die Klimatisierungssteuerungseinrichtung 26 den elektrischen Antrieb 1 und dessen Komponenten, d.h. die Leistungseinrichtung 12 und/oder die elektrische Maschine 2, an, außerhalb des optimalen Arbeitspunktes zu arbeiten, um einen höheren Betrag an Verlustwärme zu erzeugen. Die Verlustwärme wird mittels der Wärmepumpenanordnung, insbesondere der Arbeitsweise des Verdichters 50, der elektrischen Maschine 2, der Leistungseinrichtung 12 und/oder dem vierten Wärmetauscher 58 entzogen, um den Innenraum nach dem Verdichten des Fluids mittels des Verdichters 50 mit Wärme zu versorgen. Diese Betriebsart des Kraftfahrzeuges ist dann erforderlich, wenn Außentemperaturen im Bereich des Gefrierpunktes herrschen, beispielsweise bei Außentemperaturen im Bereich unter 5 °C, vorzugsweise unter 2 °C.

Normalerweise wird eine Wärmepumpenanordnung derart geregelt, dass die Temperatur des Außenwärmetauschers, der bei der beschriebenen Ausführungsformen dem vierten Wärmetauscher 58 entspricht, möglichst niedrig ist, um der Umgebung möglichst viel Wärme zu entziehen. Dieser Ansatz ist bei der Regelung eines Klimatisierungssystems eines Kraftfahrzeuges nicht möglich, da aufgrund von Luftfeuchtigkeit, Schneefall, Spritzwasser die Gefahr besteht, dass der Außenwärmetauscher, d.h. der vierte Wärmetauscher 58, vereist und/oder andere Komponenten des elektrischen Antriebes 1 vereisen.

Bei der in Figur 1 dargestellten Ausführungsform durchströmt das erste Kühlfluid im ersten Kühlkreislauf 63 den ersten Wärmetauscher 29, den zweiten Wärmetauscher 34 und den vierten Wärmetauscher 58 in serieller Reihenfolge. Es ist aber auch möglich, dass die Wärmetauscher parallel durchströmt werden.

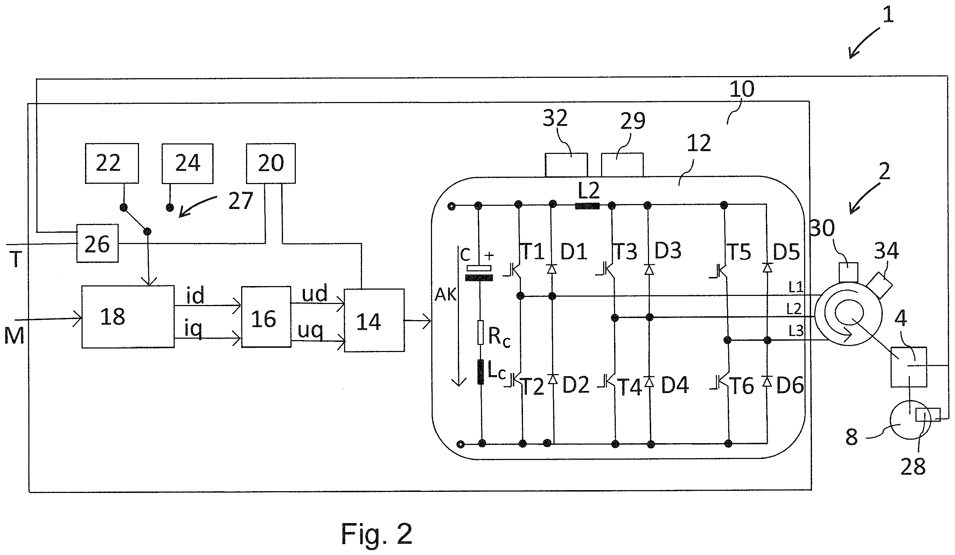

Figur 2 zeigt eine Prinzipschaltskizze eines Fahrzeuges mit einem elektrischen Antrieb, der die Lehren der vorliegenden Erfindung verwendet. Das Fahrzeug umfasst die elektrische Maschine 2, die sowohl ein Antriebsdrehmoment abgeben kann als auch ein Bremsmoment in einem Generatorbetrieb erzeugen kann. Die elektrische Maschine 2 ist mit einem optionalen Schaltgetriebe 4 verbunden, das ein Antriebsrad 8 antreibt, das eine Fahrbahn berührt. Das Getriebe 4 kann zumindest einen Fahrgang aufweisen, bei dem die elektrische Maschine 2 mit dem Antriebsrad 8 gekoppelt ist, und einen Leerlauf aufweisen, bei dem die elektrische Maschine 2 nicht mit dem Antriebsrad 8 gekoppelt ist. Der elektrische Antrieb umfasst ferner eine Antriebssteuerungseinrichtung 10, die die Leistungseinrichtung 12, eine Impulsbreitenmodulationseinrichtung 14, eine Stromregelungseinrichtung 16, eine Drehmomentregelungseinrichtung 18, eine Schaltfrequenzauswahleinrichtung 20, eine Tabelle für einen optimalen Feldstrom 22, eine Tabelle für einen vertrimmten Feldstrom 24 und eine Klimatisierungssteuerungseinrichtung 26 aufweist.

Im Folgenden wird die Funktionsweise der Antriebsteuerungseinrichtung 10, sofern sie einem Fachmann nicht ohnehin bekannt ist, erläutert. Ein Fahrpedal und/oder eine Geschwindigkeitsregeleinrichtung (nicht gezeigt) geben der Drehmomentregelungseinrichtung 18 ein Solldrehmoment M vor. Die Drehmomentregelungseinrichtung erzeugt einen Sollwert für einen feldbildenden Strom id und einen Sollwert für einen drehmomentbildenden Strom iq, die an die Stromregelungseinrichtung übergeben werden. Die Stromregelungseinrichtung ermittelt aus dem Sollwert für den feldbildenden Strom id und dem Sollwert für den drehmomentbildenden Strom iq einen Sollwert für eine feldbildende Spannung ud und einen Sollwert für eine drehmomentbildende Spannung uq, die an die Impulsbreitenmodulationseinrichtung 14 übergeben werden. Die Impulsbreitenmodulationseinrichtung 14 erzeugt Steuersignale für Leistungstransistoren T1, T2, T3, T4, T5, T6 einer Leistungseinrichtung 12. Der Aufbau und die Funktionsweise der Leistungseinrichtung 12 sind einem Fachmann bekannt und müssen nicht weiter erläutert werden. Die Ausgänge der Leistungstransistoren T1-T6 sind an drei Wicklungen der elektrischen Maschine 2 angeschlossen. Falls die elektrische Maschine 2 ein Drehmoment zum Antreiben des Kraftfahrzeuges erzeugt, fließt ein Strom von der Leistungseinrichtung 12 zur elektrischen Maschine. Falls die elektrische Maschine 2 ein Bremsmoment erzeugt, fließt ein Strom von der elektrischen Maschine 2 zur Leistungseinrichtung 12.

Die Antriebssteuerungseinrichtung 10 umfasst ferner eine Tabelle 22 für einen optimalen Stromwinkel β aus feldbildenden Strom und drehmomentbildenden Strom. Falls der elektrische Antrieb 1 keine zusätzliche Verlustwärme erzeugen soll, liest die Drehmomentregelungseinrichtung 18 den für den jeweiligen Betriebspunkt optimalen Stromwinkel aus der Tabelle 22 für einen optimalen Feldstrom aus. Ferner gibt die Schaltfrequenzeinrichtung 20 der Impulsbreitenmodulationseinrichtung 14 die optimale Schaltfrequenz der Leistungstransistoren T1-T6 vor. Bei einer niedrigen Drehzahl der elektrischen Maschine 2 gibt die Schaltfrequenzeinrichtung 20 eine niedrige Schaltfrequenz zum Erzeugen der Stützstellen der im Wesentlichen sinusförmigen Stromsignale zur Versorgung der elektrischen Maschine vor. Die niedrige Schaltfrequenz kann etwa 5 kHz betragen. Falls sich die elektrische Maschine 2 mit einer höheren Drehzahl dreht, gibt die Schaltfrequenzeinrichtung 20 eine höhere Schaltfrequenz für die Leistungstransistoren T1-T6 vor, wodurch mehr Stützstellen für den im Wesentlichen sinusförmigen Strom erzeugt werden, der der elektrischen Maschine 2 zugeführt wird.

Im Folgenden wird die Funktionsweise der Antriebssteuerungseinrichtung 10 erläutert, falls zusätzliche Verlustwärme zum Temperieren des Innenraums des Kraftfahrzeuges angefordert wird. Die Klimatisierungssteuerungseinrichtung 26 kann bewirken, dass der Stromwinkel β aus felderzeugenden Strom id und drehmomenterzeugenden Strom iq verändert wird. Beispielsweise kann zusätzlicher felderzeugender Strom id erzeugt werden. Falls zusätzliche Verlustwärme erzeugt werden soll, wird eine Schalteinrichtung 27 so geschaltet, das die Drehmomentregelungseinrichtung 18 den Sollwert für einen für den jeweiligen Betriebspunkt optimalen Stromwinkel β aus der Tabelle 24 für einen vertrimmten feldbildenden Strom id ausliest. Generell gilt, dass die von einem elektrischen Antrieb 1 erzeugte Verlustwärme proportional zum Quadrat des Stromes ist. Durch den höheren feldbildenden Strom id wird die Verlustleistung des elektrischen Antriebs 1 erhöht und zwar proportional zum Quadrat der Zunahme des feldbildenden Stroms id.

Die Klimatisierungssteuerungseinrichtung 26 kann eine Bremse 28 des Kraftfahrzeuges betätigen und die elektrische Maschine 2 mittels der Leistungseinrichtung 12 so ansteuern, dass sie das Kraftfahrzeug bewegen soll. Dadurch entsteht zusätzliche Verlustwärme.

Die Klimatisierungssteuerungseinrichtung 26 kann die Leistungseinrichtung 12 so ansteuern, dass lediglich ein feldbildender Strom id der elektrischen Maschine zugeführt wird, wodurch zusätzliche Verlustwärme erzeugt wird.

Die Klimatisierungssteuerungseinrichtung 26 kann mittels der Leistungseinrichtung 12 die elektrische Maschine 2 derart ansteuern, dass ein elektrisches Drehfeld erzeugt wird, ohne dass sich die Achse der elektrischen Maschine 2 dreht, so dass zusätzliche Verlustwärme entsteht. Dies kann beispielsweise durch ein elektrisches Feld mit einer vergleichsweise hohen Winkelfrequenz erreicht werden.

Falls sich das Kraftfahrzeug im Stillstand befindet, steuert die Klimatisierungssteuerungseinrichtung 26 die elektrische Maschine 2 mittels der Leistungseinrichtung 12 derart an, dass die elektrische Maschine ein erstes Drehmoment in eine erste Richtung erzeugt und anschließend ein zweites Drehmoment in eine zweite Richtung erzeugt, die der ersten Richtung entgegengesetzt ist. Das Kraftfahrzeug wird durch das erste Drehmoment und das zweite Drehmoment nicht von dem Ort, an dem es sich befindet, wegbewegt. Dadurch kann auch zusätzliche Verlustwärme erzeugt werden.

Falls sich das Kraftfahrzeug bewegt, kann die Klimatisierungssteuerungseinrichtung 26 mittels der Leistungseinrichtung 12 die elektrische Maschine derart ansteuern, dass die elektrische Maschine ein erstes Überlagerungsmoment in die erste Richtung erzeugt und anschließend ein zweites Überlagerungsdrehmoment in die zweite Richtung erzeugt, die der ersten Richtung entgegengesetzt ist. Das erste Überlagerungsdrehmoment und das zweite Überlagerungsdrehmoment sind einer Drehbewegung der elektrischen Maschine 2 überlagert. Das Kraftfahrzeug wird durch das erste Überlagerungsdrehmoment und das zweite Überlagerungsdrehmoment nicht beschleunigt und nicht verzögert. Das Überlagerungsdrehmoment kann ein Drehmoment sein, das überlagert wird, wenn die elektrische Maschine 2 das Kraftfahrzeug antreibt. Auch hierdurch wird zusätzliche Verlustwärme erzeugt.

Falls sich das Getriebe 4 des Kraftfahrzeuges im Leerlauf befindet, so dass kein Drehmoment von der elektrischen Maschine 2 an ein Antriebsrad 8 übertragen wird, kann die Klimatisierungssteuerungseinrichtung 26 den elektrischen Antrieb 2 mittels der Leistungseinrichtung 12 derart ansteuern, dass die elektrische Maschine 2 ein Drehmoment erzeugt. Auch dadurch wird zusätzliche Verlustwärme erzeugt.

Falls die elektrische Maschine ein Drehmoment zum Antreiben des Kraftfahrzeuges erzeugt, kann die Klimatisierungssteuerungseinrichtung 26 die elektrische Maschine 2 mittels der Leistungseinrichtung 12 so ansteuern, dass der elektrischen Maschine 2 ein höherer feldbildender Strom id zugeführt wird, als für den jeweiligen Betriebspunkt erforderlich ist. Auch hiermit wird zusätzliche Verlustwärme erzeugt.

Falls die elektrische Maschine 2 Strom erzeugt, kann die Klimatisierungssteuerungseinrichtung 26 mittels der Leistungseinrichtung 12 bewirken, dass ein höherer feldbildender Strom id von der elektrischen Maschine zur Leistungseinrichtung 12 fließt. Dadurch kann beim Rekuperationsbetrieb und/oder Generatorbetrieb mehr Verlustwärme erzeugt werden. Durch eine derartige Vertrimmung kann mechanische Energie, d.h. Bremsenergie, aufgenommen werden, ohne Energie in den Speicher zu leiten. Dies kann zur Reduktion der thermischen Belastung und/oder des Verschleißes der mechanischen Bremse (Scheibenbremse, Trommelbremse) führen.

Die Klimatisierungssteuerungseinrichtung 26 oder eine andere Steuerungseinrichtung des Kraftfahrzeuges kann den elektrischen Antrieb 1 derart ansteuern, dass, falls der Ladezustand des Akkumulators eine Ladungsaufnahme bzw. Stromaufnahme verhindert, vom optimalen Betriebspunkt der elektrischen Maschine 2, der Antriebssteuerungseinrichtung 10 und/oder der Leistungseinrichtung 12 abgewichen wird, so dass weiterhin ohne mechanischen Verschleiß verzögert werden kann und die dabei im elektrischen Antrieb 1 anfallende Verlustwärme zur Klimatisierung des Innenraums verwendet werden kann.

Am wirkungsvollsten kann ein Kühlfluid durch Verluste im Stator erwärmt werden. Dabei entstehen die niedrigsten Wärmeübergangsverluste von der im Statorblech aufgrund der Eisenverluste erzeugten Verlustwärme. Ferner kann die Verlustwärme in der Statorwicklung effizient abgeführt werden. Die Verlustwärme im Rotor kann wegen des isolierenden Luftspalts nur bedingt bzw. langsam durch die Statorkühlung abgeführt werden. Eine Kühlung der elektrischen Maschine 2 kann durch einen zweiten Wärmetauscher 34 erfolgen, der in und/oder an den Blechpaketen und/oder durch und/oder an den Wicklungen der elektrischen Maschine 2 angeordnet ist. Dem Fachmann ist eine derartige Fluidkühlung bekannt und daher wird sie im Sinne der Prägnanz nicht weiter detailliert beschrieben.

Die vorliegende Erfindung hat den Vorteil, dass Wärme zum Aufheizen des Innenraums eines elektrisch angetriebenen Fahrzeuges erzeugt werden kann, ohne dass zusätzliche Bauteile erforderlich sind. Dadurch können der Herstellaufwand und die Masse des elektrisch angetriebenen Kraftfahrzeuges reduziert werden.

## Patentansprüche

1. Verfahren zum Temperieren eines Innenraums eines Kraftfahrzeuges mit einem elektrischen Antrieb mittels einer Wärmepumpenanordnung mit einem Heiztemperaturbereich und einem Niedertemperaturbereich, wobei der Heiztemperaturbereich zumindest einen thermisch mit dem Innenraum gekoppelten Innenraum-Wärmetauscher (52) umfasst und der Niedertemperaturbereich einen Außenwärmetauscher (58) und zumindest einen an einer Komponente (2, 12) des elektrischen Antriebs (1) des Fahrzuges angeordneten Wärmetauscher (29, 34) umfasst, wobei das Verfahren folgende Schritte aufweist:
- falls Komponenten (2, 12) des elektrischen Antriebs (1) einen Betrag an Verlustwärme erzeugen, der ausreicht, um die Heizenergie mittels der Wärmepumpenanordnung zu erzeugen, Abführen der Verlustwärme zumindest einer Komponente des elektrischen Antriebs (1) mittels des Niedertemperaturbereiches der Wärmepumpenanordnung, wobei sich die Temperatur des Niedertemperaturbereiches im stationären oder quasistationären Betrieb im Bereich der Umgebungstemperatur des Kraftfahrzeuges befindet und der elektrische Antrieb im Bereich eines optimalen Betriebspunktes betrieben wird; und/oder
- falls die Komponenten (2, 12) des elektrischen Antriebs (1) einen Betrag an Verlustwärme erzeugen, der nicht ausreicht, um die Heizenergie mittels der Wärmepumpenanordnung zu erzeugen, und falls die Außentemperatur so hoch und/oder die Luftfeuchtigkeit so niedrig ist, dass keine Gefahr besteht, dass eine funktionsbeeinträchtigende Vereisung im Bereich des Niedertemperaturbereiches auftritt, Abführen der Verlustwärme zumindest einer Komponente des elektrischen Antriebs (1) mittels des Niedertemperaturbereiches der Wärmepumpenanordnung und Entziehen von Wärmeenergie aus der Umgebung mittels des Außenwärmetauschers (58), wobei sich die Temperatur des Niedertemperaturbereiches im stationären oder quasistationären Betrieb unter der Umgebungstemperatur des Kraftfahrzeuges befindet und der elektrische Antrieb im Bereich eines optimalen Betriebspunktes betrieben wird;
ferner aufweisend folgende Schritte:
- falls die Komponenten (2, 12) des elektrischen Antriebs (1) beim Betrieb bei einem optimalen Betriebspunkt einen Betrag an Verlustwärme erzeugen, der nicht ausreicht, um die Heizenergie mittels der Wärmepumpenanordnung zu erzeugen, und falls die Außentemperatur so niedrig und/oder die Luftfeuchtigkeit so hoch ist, dass Gefahr besteht, dass eine funktionsbeeinträchtigende Vereisung im Bereich des Niedertemperaturbereiches auftreten kann, Ansteuern des elektrischen Antriebs (1) außerhalb des optimalen Betriebspunktes derart, dass die zumindest eine ersten elektrischen Komponente (2, 12) des elektrischen Antriebs (1) im stationären oder quasistationären Betrieb eine derartige Verlustwärme erzeugt, dass die Wärmepumpenanordnung die Heizenergie erzeugen kann; und
- Abführen der von der zumindest einen elektrischen Komponente (2, 12) erzeugten Verlustwärme mittels des Niedertemperaturbereiches der Wärmepumpenanordnung.

2. Verfahren nach Anspruch 1, wobei der elektrische Antrieb folgendes aufweist:
- einen Akkumulator (40),
- eine elektrische Maschine (2), die vom Akkumulator mit Strom versorgt wird und die das Kraftfahrzeug antreibt, und
- eine Antriebssteuerungseinrichtung (10), die die Versorgung der elektrischen Maschine (2) mit Strom aus dem Akkumulator (40) steuert und/oder die das Laden des Akkumulators (40) mit von der elektrischen Maschine (2) erzeugten Strom steuert.

3. Verfahren nach Anspruch 1 oder 2, **dadurch gekennzeichnet, dass** die Wärmepumpenanordnung derart angesteuert wird, dass sich die Temperatur des Niedertemperaturbereiches im Bereich von etwa +/- 10 K, vorzugsweise im Bereich von etwa +/- 5 K, um die Umgebungstemperatur des Kraftfahrzeuges befindet.

4. Verfahren nach einem der Ansprüche 1 bis 3, **gekennzeichnet durch** den folgenden Schritt zum Erzeugen von Verlustwärme:
- Liefern von Strom durch die Antriebssteuerungseinrichtung (10) so, dass sich das Verhältnis aus dem feldbildenden Strom id und aus dem drehmomentbildenden Strom iq außerhalb des für den jeweiligen Betriebspunkt optimalen Verhältnisses aus dem feldbildenden Strom id und aus dem drehmomentbildenden Strom iq befindet.

5. Verfahren nach einem der Ansprüche 1 bis 4, **gekennzeichnet durch** zumindest einen der folgenden Schritte zum Erzeugen von Verlustwärme:
- Betätigen einer Bremse des Kraftfahrzeuges und Ansteuern des elektrischen Antriebs (1) so, dass er das Kraftfahrzeug bewegen soll;
- Ansteuern der Antriebssteuerungseinrichtung (10) so, dass lediglich ein feldbildender Strom id der elektrischen Maschine (2) zugeführt wird;
- Ansteuern des elektrischen Antriebs so, dass die Antriebssteuerungseinrichtung (10) die elektrische Maschine (2) derart ansteuert, dass in der elektrischen Maschine (2) ein Drehfeld erzeugt wird, ohne dass sich die Achse der elektrischen Maschine (2) dreht;
- Falls sich das Kraftfahrzeug im Stillstand befindet, Ansteuern des elektrischen Antriebs (1) so, dass die Antriebssteuerungseinrichtung (10) die elektrischen Maschine (2) derart ansteuert, dass die elektrischen Maschine (2) ein erstes Drehmoment in eine erste Richtung erzeugt und anschließend ein zweites Drehmoment in eine zweite Richtung erzeugt, die der ersten Richtung entgegengesetzt ist, wobei das Kraftfahrzeug durch das erste Drehmoment und das zweite Drehmoment nicht von dem Ort, an dem es sich befindet, wegbewegt wird;
- Falls sich das Kraftahrzeug bewegt, Ansteuern des elektrischen Antriebs (1) so, dass die Antriebssteuerungseinrichtung (10) die elektrische Maschine (2) derart ansteuert, dass die elektrischen Maschine (2) ein erstes Überlagerungsdrehmoment in die erste Richtung erzeugt und anschließend ein zweites Überlagerungsdrehmoment in die zweite Richtung erzeugt, die der ersten Richtung entgegengesetzt ist, wobei das erste Überlagerungsdrehmoment und das zweite Überlagerungsdrehmoment einer Drehbewegung der elektrischen Maschine (2) überlagert werden und das Kraftfahrzeug durch das erste Überlagerungsdrehmoment und das zweite Überlagerungsdrehmoment nicht beschleunigt und nicht verzögert wird;
- Falls sich ein Getriebe (4) des Kraftfahrzeuges im Leerlauf befindet, so dass kein Drehmoment von der elektrischen Maschine (2) an ein Antriebsrad (8) übertragen wird, Ansteuern des elektrischen Antriebs (1) so, dass die Antriebssteuerungseinrichtung (10) die elektrische Maschine (2) derart ansteuert, dass die elektrische Maschine (2) ein Drehmoment erzeugt;
- Falls die elektrische Maschine (2) ein Drehmoment zum Antreiben des Kraftfahrzeuges erzeugt, Ansteuern des elektrischen Antriebs (1) so, dass Antriebssteuerungseinrichtung (10) der elektrischen Maschine (2) einen höheren feldbildenden Strom id zuführt, als für den jeweiligen Betriebspunkt erforderlich ist; und
- Falls die elektrische Maschine (2) Strom erzeugt, Ansteuern des elektrischen Antriebs (1) so, dass ein höherer feldbildender Strom id von der elektrischen Maschine (2) zur Antriebssteuerungseinrichtung (10) fließt.

6. Klimatisierungseinrichtung für ein Kraftfahrzeug mit einem elektrischen Antrieb (1), der einen Akkumulator (40), eine Leistungseinrichtung (12) und eine elektrische Maschine (2) umfasst, die von dem Akkumulator (40) mit Strom versorgt wird und die das Kraftfahrzeug antreibt, umfassend
- eine Wärmepumpenanordnung mit einem Niedertemperaturbereich, der mit mindestens einer Komponente (2, 12, 40) des elektrischen Antriebs (1) und mit der Umgebung des Kraftfahrzeuges mittels eines Außenwärmetauschers (58) thermisch gekoppelt ist, und einem Heiztemperaturbereich, der mit dem Innenraum des Kraftfahrzeuges mittels eines Innenraum-Wärmetauschers (52) thermisch gekoppelt ist;
wobei die Klimatisierungseinrichtung dazu ausgebildet ist,
- falls die Komponenten (2, 12, 40) des elektrischen Antriebs (1) einen Betrag an Verlustwärme erzeugen, der ausreicht, um die Heizenergie mittels der Wärmepumpenanordnung zu erzeugen, die Verlustwärme zumindest einer Komponente (2, 12, 40) des elektrischen Antriebs (1) mittels des Niedertemperaturbereiches der Wärmepumpenanordnung abzuführen, wobei sich die Temperatur des Niedertemperaturbereiches im stationären oder quasistationären Betrieb im Bereich der Umgebungstemperatur des Kraftfahrzeuges befindet und der elektrische Antrieb (1) im Bereich eines optimalen Betriebspunktes betrieben wird; und/oder
- falls die Komponenten des elektrischen Antriebs einen Betrag an Verlustwärme erzeugen, der nicht ausreicht, um die Heizenergie mittels der Wärmepumpenanordnung zu erzeugen, und falls die Außentemperatur so hoch und/oder die Luftfeuchtigkeit so niedrig ist, dass keine Gefahr besteht, dass eine funktionsbeeinträchtigende Vereisung im Bereich des Niedertemperaturbereiches auftritt, die Verlustwärme zumindest einer Komponente (2, 12, 40) des elektrischen Antriebs (1) mittels des Niedertemperaturbereiches der Wärmepumpenanordnung abzuführen und der Umgebung mittels des Außenwärmetauschers (58) Wärmeenergie zu entziehen, wobei sich die Temperatur des Niedertemperaturbereiches im stationären oder quasistationären Betrieb unter der Umgebungstemperatur des Kraftfahrzeuges befindet und der elektrische Antrieb im Bereich eines optimalen Betriebspunktes betrieben wird,
wobei die Klimatisierungseinrichtung ferner dazu ausgebildet ist,
- falls Komponenten des elektrischen Antriebs (1) einen Betrag an Verlustwärme erzeugen, der nicht ausreicht, um die Heizenergie mittels der Wärmepumpenanordnung zu erzeugen, und falls die Außentemperatur so niedrig und/oder die Luftfeuchtigkeit so hoch ist, dass Gefahr besteht, dass eine funktionsbeeinträchtigende Vereisung im Bereich des Niedertemperaturbereiches auftritt, den elektrischen Antrieb (1) außerhalb des optimalen Betriebspunktes derart anzusteuern, dass die zumindest eine ersten elektrischen Komponente (2, 12) des elektrischen Antriebs (1) im stationären oder quasistationären Betrieb eine derartige Verlustwärme erzeugt, dass die Wärmepumpenanordnung die Heizenergie erzeugen kann, und um die von der zumindest einen elektrischen Komponente (2, 12, 40) erzeugten Verlustwärme mittels des Niedertemperaturbereiches der Wärmepumpenanordnung abzuführen.

## Claims

1. Method for the temperature control of an interior compartment of a motor vehicle having an electric drive by way of a heat pump arrangement having a heating temperature region and having a low-temperature region, wherein the heating temperature region comprises at least one interior compartment heat exchanger (52) which is thermally coupled to the interior compartment, and the low-temperature region comprises an exterior heat exchanger (58) and at least one heat exchanger (29, 34) which is arranged on a component (2, 12) of the electric drive (1) of the vehicle, wherein the method has the following steps:
- if components (2, 12) of the electric drive (1) generate heat losses of a magnitude sufficient to generate the heating energy by way of the heat pump arrangement, dissipating the heat losses of at least one component of the electric drive (1) by way of the low-temperature region of the heat pump arrangement, wherein the temperature of the low-temperature region lies, in steady-state or quasi-steady-state operation, in the region of the temperature of the surroundings of the motor vehicle, and the electric drive is operated in the region of an optimum operating point; and/or
- if the components (2, 12) of the electric drive (1) generate heat losses of a magnitude not sufficient to generate the heating energy by way of the heat pump arrangement, and if the exterior temperature is so high, and/or the air humidity so low, that there is no risk of function-impairing icing occurring in the region of the low-temperature region, dissipating the heat losses of at least one component of the electric drive (1) by way of the low-temperature region of the heat pump arrangement, and extracting heat energy from the surroundings by way of the exterior heat exchanger (58), wherein the temperature of the low-temperature region lies, in steady-state or quasi-steady-state operation, below the temperature of the surroundings of the motor vehicle, and the electric drive is operated in the region of an optimum operating point;
further having the following steps:
- if the components (2, 12) of the electric drive (1) generate, during operation at an optimum operating point, heat losses of a magnitude not sufficient to generate the heating energy by way of the heat pump arrangement, and if the exterior temperature is so low, and/or the air humidity so high, that there is the risk of function-impairing icing occurring in the region of the low-temperature region, actuating the electric drive (1) outside the optimum operating point such that the at least one first electrical component (2, 12) of the electric drive (1) generates, in steady-state or quasi-steady-state operation, heat losses such that the heat pump arrangement can generate the heating energy; and
- dissipating the heat losses generated by the at least one electrical component (2, 12) by way of the low-temperature region of the heat pump arrangement.

2. Method according to Claim 1, wherein the electric drive has the following:
- a battery (40),
- an electric machine (2) which is supplied with current from the battery and which drives the motor vehicle, and
- a drive control device (10) which controls the supply of current from the battery (40) to the electric machine (2) and/or which controls the charging of the battery (40) with current generated by the electric machine (2).

3. Method according to Claims 1 or 2, **characterized in that** the heat pump arrangement is actuated such that the temperature of the low-temperature region lies in the range of approximately +/-10 K, preferably in the range of approximately +/-5 K, around the temperature of the surroundings of the motor vehicle.

4. Method according to one of Claims 1 to 3, **characterized by** the following step for generating heat losses:
- providing current by way of the drive control device (10) such that the ratio of the field-forming current id and the torque-forming current iq lies outside the optimum ratio, for the respective operating point, of the field-forming current id and the torque-forming current iq.

5. Method according to one of Claims 1 to 4, **characterized by** at least one of the following steps for generating heat losses:
- actuating a brake of the motor vehicle and actuating the electric drive (1) such that said electric drive is intended to move the motor vehicle;
- actuating the drive control device (10) such that only a field-forming current id is supplied to the electric machine (2);
- actuating the electric drive such that the drive control device (10) actuates the electric machine (2) such that a rotating field is generated in the electric machine (2), without the axle of the electric machine (2) rotating;
- if the motor vehicle is at a standstill, actuating the electric drive (1) such that the drive control device (10) actuates the electric machine (2) such that the electric machine (2) generates a first torque in a first direction and subsequently generates a second torque in a second direction which is opposite to the first direction, wherein the first torque and the second torque do not cause the motor vehicle to move away from the location at which it is situated;
- if the motor vehicle is moving, actuating the electric drive (1) such that the drive control device (10) actuates the electric machine (2) such that the electric machine (2) generates a first superposition torque in the first direction and subsequently generates a second superposition torque in the second direction which is opposite to the first direction, wherein the first superposition torque and the second superposition torque are superposed on a rotational movement of the electric machine (2), and the motor vehicle is not accelerated and is not decelerated by the first superposition torque and the second superposition torque;
- if a gearbox (4) of the motor vehicle is in neutral, such that no torque is transmitted from the electric machine (2) to a drive wheel (8), actuating the electric drive (1) such that the drive control device (10) actuates the electric machine (2) such that the electric machine (2) generates a torque;
- if the electric machine (2) generates a torque for driving the motor vehicle, actuating the electric drive (1) such that the drive control device (10) supplies to the electric machine (2) a field-forming current id higher than that required for the respective operating point; and
- if the electric machine (2) generates current, actuating the electric drive (1) such that a higher field-forming current id flows from the electric machine (2) to the drive control device (10).

6. Air-conditioning device for a motor vehicle having an electric drive (1) which comprises a battery (40), a power device (12) and an electric machine (2) which is supplied with current from the battery (40) and which drives the motor vehicle, comprising
- a heat pump arrangement having a low-temperature region, which is thermally coupled to at least one component (2, 12, 40) of the electric drive (1) and to the surroundings of the motor vehicle by way of an exterior heat exchanger (58), and having a heating temperature region, which is thermally coupled to the interior compartment of the motor vehicle by way of an interior compartment heat exchanger (52);
wherein the air-conditioning device is designed such that,
- if the components (2, 12, 40) of the electric drive (1) generate heat losses of a magnitude sufficient to generate the heating energy by way of the heat pump arrangement, said air-conditioning device dissipates the heat losses of at least one component (2, 12, 40) of the electric drive (1) by way of the low-temperature region of the heat pump arrangement, wherein the temperature of the low-temperature region lies, in steady-state or quasi-steady-state operation, in the region of the temperature of the surroundings of the motor vehicle, and the electric drive (1) is operated in the region of an optimum operating point; and/or
- if the components of the electric drive generate heat losses of a magnitude not sufficient to generate the heating energy by way of the heat pump arrangement, and if the exterior temperature is so high, and/or the air humidity so low, that there is no risk of function-impairing icing occurring in the region of the low-temperature region, said air-conditioning device dissipates the heat losses of at least one component (2, 12, 40) of the electric drive (1) by way of the low-temperature region of the heat pump arrangement and extracts heat energy from the surroundings by way of the exterior heat exchanger (58), wherein the temperature of the low-temperature region lies, in steady-state or quasi-steady-state operation, below the temperature of the surroundings of the motor vehicle, and the electric drive is operated in the region of an optimum operating point,
wherein the air-conditioning device is further designed such that,
- if components of the electric drive (1) generate heat losses of a magnitude not sufficient to generate the heating energy by way of the heat pump arrangement, and if the exterior temperature is so low, and/or the air humidity so high, that there is the risk of function-impairing icing occurring in the region of the low-temperature region, said air-conditioning device actuates the electric drive (1) outside the optimum operating point such that the at least one first electrical component (2, 12) of the electric drive (1) generates, in steady-state or quasi-steady-state operation, heat losses such that the heat pump arrangement can generate the heating energy, and said air-conditioning device dissipates the heat losses generated by the at least one electrical component (2, 12, 40) by way of the low-temperature region of the heat pump arrangement.

## Revendications

1. Procédé de régulation de la température d'un habitacle d'un véhicule automobile à entraînement électrique au moyen d'un ensemble formant pompe à chaleur pourvu d'une zone de température de chauffage et d'une zone à basse température, la zone de température de chauffage comprenant au moins un échangeur de chaleur d'habitacle (52) couplé thermiquement à l'habitacle et la zone à basse température comprenant un échangeur de chaleur extérieur (58) et au moins un échangeur de chaleur (29, 34) disposé au niveau d'un composant (2, 12) de l'entraînement électrique (1) du véhicule, le procédé comprenant les étapes suivantes :
- si des composants (2, 12) de l'entraînement électrique (1) génèrent une quantité de chaleur perdue qui est suffisante pour générer l'énergie de chauffage au moyen de l'ensemble formant pompe à chaleur, dissiper la chaleur perdue d'au moins un composant de l'entraînement électrique (1) au moyen de la zone à basse température de l'ensemble formant pompe à chaleur, la température de la zone à basse température en fonctionnement en régime permanent ou en régime quasi permanent se situant dans la zone de la température ambiante du véhicule automobile et l'entraînement électrique étant utilisé dans la zone d'un point de fonctionnement optimal ; et/ou
- si les composants (2, 12) de l'entraînement électrique (1) génèrent une quantité de chaleur perdue qui n'est pas suffisante pour générer l'énergie de chauffage au moyen de l'ensemble formant pompe à chaleur, et si la température extérieure est élevée et/ou l'humidité est faible au point qu'il n'y a aucun risque de formation de givre au niveau de la zone à basse température qui nuirait au fonctionnement, dissiper la chaleur perdue d'au moins un composant de l'entraînement électrique (1) au moyen de la zone à basse température de l'ensemble formant pompe à chaleur et extraire l'énergie thermique de l'environnement au moyen de l'échangeur de chaleur extérieur (58), la température de la zone à basse température en fonctionnement en régime permanent ou en régime quasi-permanent étant inférieure à la température ambiante du véhicule automobile et l'entraînement électrique étant utilisé dans la zone d'un point de fonctionnement optimal ;
ledit procédé comprenant en outre les étapes suivantes :
- si les composants (2, 12) de l'entraînement électrique (1) génèrent pendant le fonctionnement à un point de fonctionnement optimal une quantité de chaleur perdue qui n'est pas suffisante pour générer l'énergie de chauffage au moyen de l'ensemble formant pompe à chaleur, et si la température extérieure est basse et/ou l'humidité est élevée au point qu'il existe un risque de formation de givre dans la zone à basse température, qui nuirait au fonctionnement, commander l'entraînement électrique (1) en dehors du point de fonctionnement optimal de manière à ce que l'au moins un premier composant électrique (2, 12) de l'entraînement électrique (1) en fonctionnement en régime permanent ou en régime quasi permanent génère une chaleur perdue telle que l'ensemble formant pompe à chaleur puisse générer l'énergie de chauffage ; et
- dissiper la chaleur perdue générée par l'au moins un composant électrique (2, 12) au moyen de la zone à basse température de l'ensemble formant pompe à chaleur.

2. Procédé selon la revendication 1, l'entraînement électrique comportant les éléments suivants :
- un accumulateur (40),
- une machine électrique (2) qui est alimentée en courant par l'accumulateur et qui entraîne le véhicule automobile, et
- un dispositif de commande d'entraînement (10) qui commande l'alimentation de la machine électrique (2) en courant à partir de l'accumulateur (40) et/ou qui commande la charge de l'accumulateur (40) avec le courant généré par la machine électrique (2).

3. Procédé selon la revendication 1 ou 2, **caractérisé en ce que** l'ensemble formant pompe à chaleur est commandé de manière à ce que la température de la zone à basse température est située autour de la température ambiante du véhicule automobile dans la plage d'environ +/- 10 K, de préférence dans la plage d'environ +/-5 K.

4. Procédé selon l'une des revendications 1 à 3, **caractérisé par** l'étape suivante de génération de chaleur perdue :
- fournir du courant par le biais du dispositif de commande d'entraînement (10) de sorte que le rapport du courant de formation de champ id et du courant de formation de couple iq soit en dehors du rapport, optimal pour le point de fonctionnement respectif, du courant de formation de champ id et du courant de formation de couple iq.

5. Procédé selon l'une des revendications 1 à 4, **caractérisé par** au moins une des étapes suivantes de génération de chaleur perdue :
- actionner un frein du véhicule automobile et commander l'entraînement électrique (1) pour qu'il déplace le véhicule automobile ;
- commander le dispositif de commande d'entraînement (10) de manière à n'amener qu'un courant de formation de champ id de la machine électrique (2) ;
- commander l'entraînement électrique de sorte que le dispositif de commande d'entraînement (10) commande la machine électrique (2) de manière à générer un champ tournant dans la machine électrique (2) sans que l'axe de la machine électrique (2) tourne ;
- si le véhicule automobile est à l'arrêt, commander l'entraînement électrique (1) de sorte que le dispositif de commande d'entraînement (10) commande la machine électrique (2) de manière à ce que la machine électrique (2) génère une premier couple dans un premier sens puis génère un deuxième couple dans un deuxième sens opposé au premier sens, le véhicule automobile n'étant pas éloigné de l'endroit où il se trouve par le premier couple et le deuxième couple ;
- si le véhicule automobile se déplace, commander l'entraînement électrique (1) de sorte que le dispositif de commande d'entraînement (10) commande la machine électrique (2) de manière à ce que la machine électrique (2) génère un premier couple superposé dans le premier sens puis un deuxième couple superposé dans le deuxième sens qui est opposé au premier sens, le premier couple superposé et le deuxième couple superposé étant superposés à un mouvement de rotation de la machine électrique (2) et le véhicule automobile n'étant ni accéléré ni ralenti par le premier couple superposé et le deuxième couple superposé ;
- si une transmission (4) du véhicule automobile est au ralenti de sorte qu'aucun couple n'est transmis de la machine électrique (2) à une roue motrice (8), commander l'entraînement électrique (1) de sorte que le dispositif de commande d'entraînement (10) commande la machine électrique (2) de manière à ce que la machine électrique (2) génère un couple ;
- si la machine électrique (2) génère un couple pour entraîner le véhicule automobile, commander l'entraînement électrique (1) de sorte que le dispositif de commande d'entraînement (10) amène à la machine électrique (2) un courant de formation de champ id plus élevé que nécessaire pour le point de fonctionnement respectif ; et
- si la machine électrique (2) génère un courant, commander l'entraînement électrique (1) de sorte qu'un courant de formation de champ supérieur id circule de la machine électrique (2) vers le dispositif de commande d'entraînement (10).

6. Dispositif de climatisation destiné à un véhicule automobile pourvu d'un entraînement électrique (1) qui comprend un accumulateur (40), un dispositif de puissance (12) et une machine électrique (2) qui est alimentée en courant par l'accumulateur (40) et entraîne le véhicule automobile, ledit dispositif de climatisation comprenant
- un ensemble formant pompe à chaleur pourvu d'une zone à basse température qui est couplée thermiquement à au moins un composant (2, 12, 40) de l'entraînement électrique (1) et à l'environnement du véhicule automobile au moyen d'un échangeur de chaleur extérieur (58), et une zone de température de chauffage qui est couplée thermiquement à l'habitacle du véhicule automobile au moyen d'un échangeur de chaleur intérieur (52) ;
le dispositif de climatisation d'air étant conçu
- si les composants (2, 12, 40) de l'entraînement électrique (1) génèrent une quantité de chaleur perdue suffisante pour générer l'énergie de chauffage au moyen de l'ensemble formant pompe à chaleur, pour dissiper la chaleur perdue d'au moins un composant (2, 12, 40) de l'entraînement électrique (1) au moyen de la zone à basse température de l'ensemble formant pompe à chaleur, la température de la zone à basse température en fonctionnement en régime permanent ou en régime quasi-permanent étant située dans la zone de la température ambiante du véhicule automobile et l'entraînement électrique (1) étant utilisé dans la zone d'un point de fonctionnement optimal ; et/ou
- si les composants de l'entraînement électrique génèrent une quantité de chaleur perdue qui n'est pas suffisante pour générer l'énergie de chauffage au moyen de l'ensemble formant pompe à chaleur, et si la température extérieure est élevée et/ou l'humidité est faible au point qu'il n'y a aucun risque de formation de givre au niveau de la zone à basse température qui nuirait au fonctionnement, pour dissiper la chaleur perdue d'au moins un composant (2, 12, 40) de l'entraînement électrique (1) au moyen de la zone à basse température de l'ensemble formant pompe à chaleur et pour extraire l'énergie thermique de l'environnement au moyen de l'échangeur de chaleur extérieur (58), la température de la zone à basse température en fonctionnement en régime permanent ou en régime quasi-permanent étant inférieure à la température ambiante du véhicule automobile et l'entraînement électrique étant utilisé dans la zone d'un point de fonctionnement optimal ;
le dispositif de climatisation étant en outre conçu :
- si les composants de l'entraînement électrique (1) génèrent une quantité de chaleur perdue qui n'est pas suffisante pour générer l'énergie de chauffage au moyen de l'ensemble formant pompe à chaleur, et si la température extérieure est basse et/ou l'humidité est élevée au point qu'il existe un risque de formation de givre dans la zone à basse température qui nuirait au fonctionnement, commander l'entraînement électrique (1) en dehors du point de fonctionnement optimal de manière à ce que l'au moins un premier composant électrique (2, 12) de l'entraînement électrique (1) en fonctionnement en régime permanent ou en régime quasi permanent génère une chaleur perdue telle que l'ensemble formant pompe à chaleur puisse générer l'énergie de chauffage ; et pour dissiper la chaleur perdue générée par l'au moins un composant électrique (2, 12, 40) au moyen de la zone à basse température de l'ensemble formant pompe à chaleur.
